# EUROPEAN PATENT APPLICATION

(11) **EP 4 645 710 A1**
(43) Date of publication of application: **05.11.2025**
(21) Application number: 25170638.8
(22) Date of filing: 15.04.2025
(51) Int. Cl.: H04B 7/06

(54) **FULL DUPLEX**

(30) Priority: 02.05.2024 GB 202406141
(71) Applicant: Nokia Technologies Oy, 02610 Espoo (FI)
(72) Inventor: SVENDSEN, Simon, 9220 Aalborg (DK); KIILERICH PRATAS, Nuno Manuel, 9220 Aalborg (DK); BARBU, Oana-Elena, 9220 Aalborg (DK); VEJLGAARD, Benny, 9260 Gistrup (DK); HARREBEK, Johannes, 9000 Aalborg (DK)
(74) Representative: Nokia EPO representatives

(57) **Abstract**

An apparatus comprising:
at least a first antenna port and a second antenna port;
a power amplifier;
first switching circuitry for switching between
a first simplex path from the power amplifier to the first antenna port, not the second antenna port;
a second simplex path from the power amplifier to second antenna port, not the first antenna port;
multiplex paths from the power amplifier simultaneously to the first antenna port and the second antenna port; and

impedance means for providing different impedance, for a first multiplex path from the power amplifier to the first antenna port and for a second multiplex path from the power amplifier to the second antenna port, while the first multiplex path and the second multiplex path are simultaneous multiplex paths from the power amplifier to the first antenna port and the second antenna port respectively.

## Description

### TECHNOLOGICAL FIELD

Examples of the disclosure relate to full duplex operation. Some relate to full duplex operation with uplink transmission and simultaneous downlink reception..

### BACKGROUND

Full duplex requires simultaneous transmission and reception by the same apparatus. The transmitted energy can enter the reception path unless there is sufficient isolation. Transmitted energy in the reception path is undesirable. It can for example cause gain compression of the reception low-noise amplifier and reduce the Signal-to-Noise Ratio to even a negative value.

On way to achieve isolation is by using spatial isolation between transmission and reception.

This approach is not practical for small apparatus. These apparatus can, for example, transmit in the uplink and simultaneously receive in the downlink.

### BRIEF SUMMARY

According to various, but not necessarily all, examples there is provided an apparatus comprising:
at least a first antenna port and a second antenna port;
a power amplifier;
first switching circuitry for switching between
   a first simplex path from the power amplifier to the first antenna port, not the second antenna port;
   a second simplex path from the power amplifier to second antenna port, not the first antenna port;
   multiplex paths from the power amplifier simultaneously to the first antenna port and the second antenna port; and
impedance means for providing different impedance, for a first multiplex path from the power amplifier to the first antenna port and for a second multiplex path from the power amplifier to the second antenna port, while the first multiplex path and the second multiplex path are simultaneous multiplex paths from the power amplifier to the first antenna port and the second antenna port respectively.

In some but not necessarily all examples, the impedance means is configured to control a difference in impedance between the first multiplex path and the second multiplex path and a difference in impedance between the first simplex path and the second simplex path.

In some but not necessarily all examples, the impedance means comprises shared impedance circuitry that is shared between multiple ones of the first multiplex path, the second multiplex path, the first simplex path and the second simplex path.

In some but not necessarily all examples, the shared impedance circuitry comprises a phase shifter shared between at least one of the first multiplex path and the second multiplex path and one of the first simplex path and the second simplex path.

In some but not necessarily all examples, the shared impedance circuitry comprises a phase shifter shared between at least one of the first multiplex path and the second multiplex path and both of the first simplex path and the second simplex path.

In some but not necessarily all examples, the shared impedance circuitry comprises:
a complex impedance matching network; and a phase shifter.

In some but not necessarily all examples, the apparatus comprises impedance circuitry, additional to the shared impedance circuitry, shared by the first multiplex path and the second multiplex path.

In some but not necessarily all examples, the apparatus comprises a first antenna port input switch configured to couple the first antenna port to the first simplex path or the first multiplex path.

In some but not necessarily all examples, the apparatus comprises a shared multiplex path that is shared by the first multiplex path and the second multiplex path,
and a path splitter for splitting the shared multiplex path into the first multiplex path.

In some but not necessarily all examples, the shared multiplex path comprises a shared multiplex impedance.

In some but not necessarily all examples, the apparatus comprises:
a common path input switch for coupling a common path shared by at least the second simplex path and the second multiplex path to the first or second simplex path or the second multiplex path,
wherein the common path comprises shared variable impedance circuitry.

In some but not necessarily all examples, the apparatus comprises: a shared simplex path shared by the first simplex path and the second simplex path and switching circuitry configured to provide a bypass of a variable multiplex impedance means for the shared simplex path.

In some but not necessarily all examples, the apparatus comprises:
a common path input switch for coupling a common path shared by the first simplex path ,and the second multiplex path to the shared simplex path or the second multiplex path split from the shared multiplex path;
a common path output switch for coupling the common path shared by the first simplex path, and the second multiplex path with the first antenna port or with the second antenna port, wherein the common path comprises shared variable impedance circuitry.

In some but not necessarily all examples, the apparatus comprises:
a common path input switch for coupling a common path shared by the first simplex path, the second simplex path and the second multiplex path to the shared simplex path or the second multiplex path split from the shared multiplex path
a common path output switch for coupling the common path shared by the first simplex path, the second simplex path and the second multiplex path with the first antenna port or with the second antenna port, wherein the common path comprises shared variable impedance circuitry.

In some but not necessarily all examples, the apparatus comprises:
a first switch configured to couple the power amplifier output to:
   a shared multiplex path shared by the first multiplex path and the second multiplex path; or
   a shared simplex path shared by the first simplex path and the second simplex path
   wherein the shared multiplex path comprises a shared multiplex impedance;
a path splitter for splitting the shared multiplex path into the first multiplex path and the second multiplex path;
a common path input switch for coupling a common path shared by the first simplex path, the second simplex path and the second multiplex path to the shared simplex path or the second multiplex path split from the shared multiplex path;
a common path output switch for coupling the common path shared by the first simplex path, the second simplex path and the second multiplex path with the first antenna port or with the second antenna port,
wherein the common path comprises shared variable impedance circuitry;
a first antenna port input switch configured to couple the first antenna port to the first simplex path or the first multiplex path;
control means for controlling the
the first switch,
the common path input switch,
the common path output switch,
the first antenna port input switch
to provide one of:
   couple the power amplifier to the first antenna port, not the second antenna port, via the first simplex path;
   couple the power amplifier to the second antenna port, not the first antenna port, via the second simplex path;
   couple the power amplifier simultaneously to the first antenna port and the second antenna port.

According to various, but not necessarily all, examples there is provided a device comprising: at least a first apparatus as described and a second apparatus as described; and circuitry configured to:
provide to the first apparatus a first signal for transmission via the first apparatus,
provide to the second apparatus a second signal for transmission via the second apparatus,
simultaneously provide to the first apparatus a first signal for transmission via the first apparatus and to the second apparatus a second signal for transmission via the second apparatus,
and configured to provide different amplification for the first signal and the second signal when simultaneously provided to the first apparatus and the second apparatus, respectively.

In some but not necessarily all examples, the device comprises multiple non-identical antennas having non-identical antenna radiation patterns including:
a first antenna coupled to the first antenna port of the first apparatus,
a second antenna coupled to the second antenna port of the first apparatus,
a third antenna coupled to the first antenna port of the second apparatus, and
a fourth antenna coupled to the second antenna port of the second apparatus;
wherein the circuitry is configured to adaptively transmit a signal from the first antenna and/or the second antenna and/or transmit a signal from the third antenna and/or the fourth antenna and is configured to adaptively control, for simultaneous reception, one or more of the first antenna, second antenna, third antenna and fourth antenna that is not being used for simultaneous transmission.

In some but not necessarily all examples, the impedance means of the first apparatus and/or the impedance means of the second apparatus is controlled to provide at least 45dB isolation between transmission and reception.

In some but not necessarily all examples, a conductive chassis part of the device provides a common ground plane for the first antenna, the second antenna, the third antenna and the fourth antenna.

In some but not necessarily all examples, the device comprises is configured as:
a bi-directional radio communication device that is configured to operate in full duplex mode;
a full-duplex terminal device;
a hand-portable device;
a user equipment (UE),
a device configured for sub band non-overlapping full duplex (SBFD);
an ambient Internet of things (A-loT) device;
a new Radio (NR) Internet of things (IoT) device;
a device enabling radio frequency energy harvesting
an activator of a passive radio configured to transmit an activation signal while simultaneously receiving a return signal;
a device configured as an intermediate device between a base station activator and a passive radio configured to transmit to the base station while simultaneously receiving from the passive radio and/or configured to receive from the base station while simultaneously transmitting to the passive radio.

According to various, but not necessarily all, examples there is provided a device comprising:
a first apparatus comprising
   at least a first antenna port and a second antenna port;
   a power amplifier;
   first switching circuitry for switching between
      a first simplex path from the power amplifier to the first antenna port, not the second antenna port;
      a second simplex path from the power amplifier to second antenna port, not the first antenna port;
      multiplex paths from the power amplifier simultaneously to the first antenna port and the second antenna port wherein the multiplex paths include a first multiplex path and a simultaneous second multiplex path; and
   impedance means for controlling impedance of different ones of the first simplex path, the second simplex path, first multiplex path and second multiplex path;
a second apparatus comprising
   at least a first antenna port and a second antenna port;
   a power amplifier;
   first switching circuitry for switching between
      a first simplex path from the power amplifier to the first antenna port, not the second antenna port;
      a second simplex path from the power amplifier to second antenna port, not the first antenna port;
      multiplex paths from the power amplifier simultaneously to the first antenna port and the second antenna port wherein the multiplex paths include a first multiplex path and a simultaneous second multiplex path; and
   impedance means for controlling impedance of different ones of the first simplex path, the second simplex path, first multiplex path and second multiplex path;
circuitry configured to:
   provide to the first apparatus a first signal for transmission via the first apparatus,
   provide to the second apparatus a second signal for transmission via the second apparatus,
   simultaneously provide to the first apparatus a first signal for transmission via the first apparatus and to the second apparatus a second signal for transmission via the second apparatus,
   and configured to provide different amplification for the first signal and the second signal when simultaneously provided to the first apparatus and the second apparatus, respectively.

In some but not necessarily all examples, the first apparatus comprises:
impedance means for controlling impedance of different ones of the first simplex path, the second simplex path, first multiplex path and second multiplex path; wherein the
circuitry is configured to control impedance means of the first apparatus.

In some but not necessarily all examples, the second apparatus comprises:
impedance means for controlling impedance of different ones of the first simplex path, the second simplex path, first multiplex path and second multiplex path; wherein the circuitry is configured to control impedance means of the second apparatus
In some but not necessarily all examples, the device comprises multiple non-identical antennas having non-identical antenna radiation patterns including:
a first antenna coupled to the first antenna port of the first apparatus,
a second antenna coupled to the second antenna port of the first apparatus,
a third antenna coupled to the first antenna port of the second apparatus, and
a fourth antenna coupled to the second antenna port of the second apparatus;
wherein the circuitry is configured to adaptively transmit a signal from the first antenna and/or the second antenna and/or transmit a signal from the third antenna and/or the fourth antenna and is configured to adaptively control, for simultaneous reception, one or more of the first antenna, second antenna, third antenna and fourth antenna that is not being used for simultaneous transmission.

In some but not necessarily all examples, the impedance means of the first apparatus and/or the impedance means of the second apparatus is controlled to provide at least 45dB isolation between transmission and reception.

In some but not necessarily all examples, a conductive chassis part of the device provides a common ground plane for the first antenna, the second antenna, the third antenna and the fourth antenna.

In some but not necessarily all examples, the device is configured as:
a bi-directional radio communication device that is configured to operate in full duplex mode;
a full-duplex terminal device;
a hand-portable device;
a user equipment (UE),
a device configured for sub band non-overlapping full duplex (SBFD);
an ambient Internet of things (A-loT) device;
a new Radio (NR) Internet of things (IoT) device;
a device enabling radio frequency energy harvesting
an activator of a passive radio configured to transmit an activation signal while simultaneously receiving a return signal;
a device configured as an intermediate device between a base station activator and a passive radio configured to transmit to the base station while simultaneously receiving from the passive radio and/or configured to receive from the base station while simultaneously transmitting to the passive radio.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function

### BRIEF DESCRIPTION

Some examples will now be described with reference to the accompanying drawings in which:
FIG. 1A, 1B, 1C show an example of the subject matter described herein;
FIG. 2A shows another example of the subject matter described herein;
FIG. 2B shows another example of the subject matter described herein;
FIG. 3A shows another example of the subject matter described herein;
FIG. 3B shows another example of the subject matter described herein;
FIG. 4A shows another example of the subject matter described herein;
FIG. 4B shows another example of the subject matter described herein;
FIG. 5 shows another example of the subject matter described herein;
FIG. 6 shows another example of the subject matter described herein;
FIG. 7A, 7B, 7C show another example of the subject matter described herein;
FIG. 8 shows another example of the subject matter described herein;
FIG. 9 shows another example of the subject matter described herein;
FIG. 10 shows another example of the subject matter described herein;
FIG. 11A shows another example of the subject matter described herein;
FIG. 11B shows another example of the subject matter described herein;
FIG. 12 shows another example of the subject matter described herein;
FIG. 13 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the following description a class (or set) can be referenced using a reference number without a subscript index (e.g. 10) and a specific instance of the class (member of the set) can be referenced using the reference number with a numerical type subscript index (e.g. 10_1) and a non-specific instance of the class (member of the set) can be referenced using the reference number with a variable type subscript index (e.g. 10_i).

### DETAILED DESCRIPTION

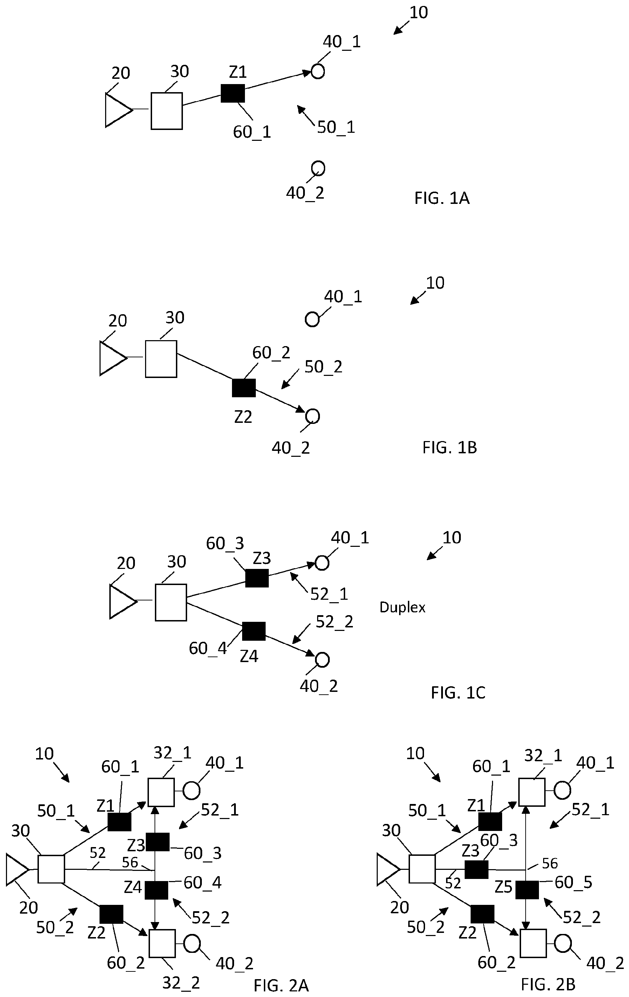

The following examples disclose an apparatus 10 comprising
at least a first antenna port 40_1 and a second antenna port 40_2;
a power amplifier 20;
first switching circuitry 30 for switching between
   a first simplex path 50_1 from the power amplifier 20 to the first antenna port 40_1, not the second antenna port 40_2 (FIG 1A);
   a second simplex path 50_2 from the power amplifier 20 to second antenna port 40_2, not the first antenna port 40_1 (FIG 1B);
   multiplex paths 52 from the power amplifier 20 simultaneously to the first antenna port 40_1 and the second antenna port 40_2; and
impedance means 60 for providing different impedance 60_3, 60_4 for a first multiplex path 52_1 from the power amplifier 20 to the first antenna port 40_1 and for a second multiplex path 52_2 from the power amplifier 20 to the second antenna port 40_2, wherein the first multiplex path 52_1 and the second multiplex path 52_2 are simultaneous multiplex paths from the power amplifier 20 to the first antenna port 40_1 and the second antenna port respectively 40_2 (FIG 1C).

The impedance means can for example, comprise impedance circuitry.

The impedance means 60 can, for example, comprise:
a first multiplex impedance means 60_3 (Z3) for a first multiplex path 52_1 from the power amplifier 20 to the first antenna port 40_1,
a second multiplex impedance means 60_4 (Z4), 60_3 & 60_5 (Z3 + Z5) for the second multiplex path 52_2 from the power amplifier 20 to the second antenna port 40_2,
a first simplex impedance means 60_1 (Z3) for a first simplex path 50_1 from the power amplifier 20 to the first antenna port 40_1, and
a second simplex impedance means 60_2 (Z2) for the second simplex path 50_2 from the power amplifier 20 to the second antenna port 40_2.

In at least some examples the impedance means provides a difference in impedance between the first multiplex path and the second multiplex path and a difference in impedance between the first simplex path and the second simplex path.

In at least some examples the impedance means provides means for controlling a difference in impedance between the first multiplex path and the second multiplex path and for controlling a difference in impedance between the first simplex path and the second simplex path.

There are different multiplex and simplex conductive paths to each antenna, with different impedance matching on different paths. The conductive paths can be formed by any suitable means via any suitable circuitry. Conductive paths can be formed by current electronic manufacturing techniques and are not limited to printed circuit boards.

FIGs 1A, 1B, 1C illustrate an apparatus 10 comprising:
a first antenna port 40_1 and a second antenna port 40_2;
a power amplifier 20;
first switching circuitry 30 for switching between
   a first simplex path 50_1 from the power amplifier 20 to the first antenna port 40_1, not the second antenna port 40_2 (FIG 1A);
   a second simplex path 50_2 from the power amplifier 20 to second antenna port 40_2, not the first antenna port 40_1 (FIG 1B);
   multiplex (duplex) paths 52 from the power amplifier 20 simultaneously to the first antenna port 40_1 and the second antenna port 40_2; and
impedance means 60 (FIG 1C).

The impedance means 60 provides different impedance 60_3, 60_4 for a first multiplex path 52_1 from the power amplifier 20 to the first antenna port 40_1 and for a second multiplex path 52_2 from the power amplifier 20 to the second antenna port 40_2. As illustrated in FIG 1C, the first multiplex path 52_1 and the second multiplex path 52_2 are simultaneous multiplex paths from the power amplifier 20 to the first antenna port 40_1 and the second antenna port 40_2 respectively.

The first multiplex path 52_1 and the second multiplex path 52_2 are simultaneously used to couple the power amplifier 20 to the first antenna port 40_1 and the second antenna port respectively 40_2. The impedance means 60 provides impedance 60_3 in the first multiplex path 52_1. The impedance means 60 provides impedance 60_4 in the second multiplex path 52_1.

The impedance means 60 can, for example, comprise:
a first multiplex impedance means 60_3 (Z3) for a first multiplex path 52_1 from the power amplifier 20 to the first antenna port 40_1,
a second multiplex impedance means 60_4 (Z4), 60_3 & 60_5 (Z3 + Z5) for the second multiplex path 52_2 from the power amplifier 20 to the second antenna port 40_2,
a first simplex impedance means 60_1 (Z3) for a first simplex path 50_1 from the power amplifier 20 to the first antenna port 40_1, and
a second simplex impedance means 60_2 (Z2) for the second simplex path 50_2 from the power amplifier 20 to the second antenna port 40_2.

The impedance means 60 provides impedance 60_1 for a first simplex path 50_1 from the power amplifier 20 to the first antenna port 40_1 as illustrated in FIG 1A.

The impedance means 60 provides impedance 60_2 for a second simplex path 50_2 from the power amplifier 20 to the second antenna port 40_2 as illustrated in FIG 1B.

In operation, the apparatus 10 can transmit via only the first simplex path 50_1 (FIG 1A), transmit via only the second simplex path 50_2 (FIG 1B), or transmit simultaneously via the first multiplex path 52_1 and the second multiplex path 52_2 (FIG 1C).

The apparatus comprises control means (not illustrated) for controlling the first switching circuitry 30.

FIG 2A illustrates an example of the apparatus 10 previously described with reference to FIGs 1A, 1B, 1C. The apparatus 10 comprises a shared multiplex path 52 shared by the first multiplex path 52_1 and the second multiplex path 52_2. A path splitter 56 is configured to split the shared multiplex path 52 into the first multiplex path 52_1 and the second multiplex path 52_2.

In some examples, an antenna port input switch 32_i is configured to couple an antenna port 40_i to the respective simplex path 50_i or the multiplex path 52_i.

In this example, but not necessarily all examples, a first antenna port input switch 32_1 is configured to couple the first antenna port 40_1 to the first simplex path 50_1 or the first multiplex path 52_1.

In this example, but not necessarily all examples, a second antenna port input switch 32_2 is configured to couple the second antenna port 40_2 to the second simplex path 50_2 or the second multiplex path 52_2.

The apparatus comprises control means (not illustrated) for controlling the antenna port input switch or switches.

FIG 2B illustrates an example of the apparatus 10 previously described with reference to FIGs 1A, 1B, 1C and FIG 2A.

In FIG 2A, the impedance 60_3 in the first multiplex path 52_1 is located after the path splitter 56 outside the shared multiplex path 52 and the impedance 60_4 in the second multiplex path 52_2 is located after the path splitter 56 outside the shared multiplex path 52. The impedance means 60 provides impedance 60_3 and impedance 60_4.

In FIG 2B, one of the impedance means 60_3, 60_4 is located before the path splitter 56 within the shared multiplex path 52 and another impedance 60_5 is located, after the path splitter 56 outside the shared multiplex path 52, in one of the first multiplexer path 52_1 or the second multiplex path 52_2. In the example illustrated, the impedance 60_3 (Z3) is located before the path splitter 56 within the shared multiplex path 52 and another impedance 60_5 (Z5) is located, after the path splitter 56 outside the shared multiplex path 52, in the second multiplex path 52_2. In this example the series combination of impedance 60_3 (Z3) and impedance 60_5 (Z5) is equivalent to the impedance 60_4 (Z4) illustrated in FIG 2A (i.e. Z4 = Z3 + Z5). The impedance means 60 provides impedance 60_3 and impedance 60_5.

In FIG 2B, the shared multiplex path 52 comprises a shared multiplex impedance 60_3.

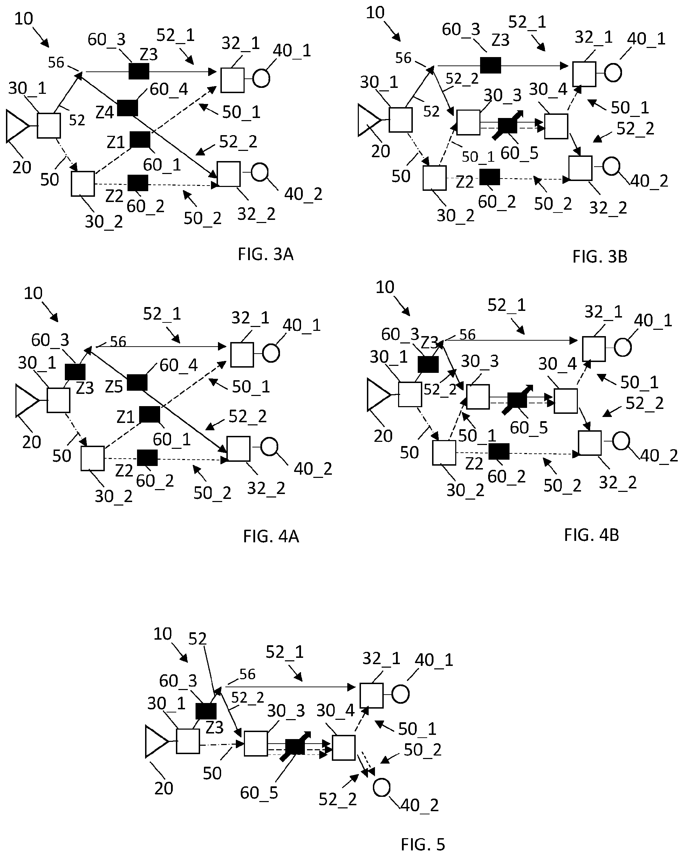

FIGs 3A, 3B illustrate examples of the apparatus 10 previously described with reference to FIG 2A. FIGs 4A, 4B and FIG 5 illustrate examples of the apparatus 10 previously described with reference to FIG 2B.

In these examples, a first switch 30_1 switches between a shared simplex path 50 (dotted line) and a shared multiplex path 52 (solid line). Additionally, a second switch 30_2 switches to the first simplex path 50_1 or the second simplex path 50_2. The shared simplex path 50 is shared by the first simplex path 50_1 and the second simplex path 50_2. The control means controls the first switch 30_1 and the second switch 30_2.

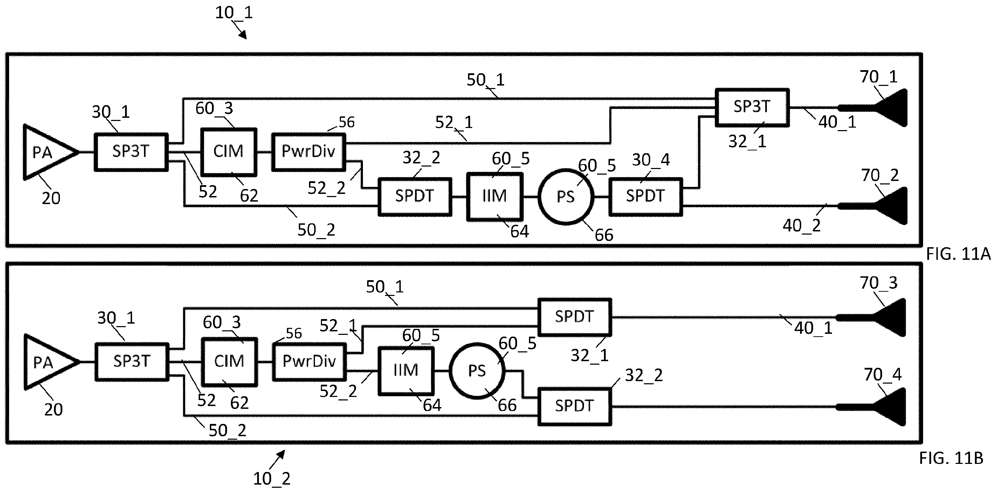

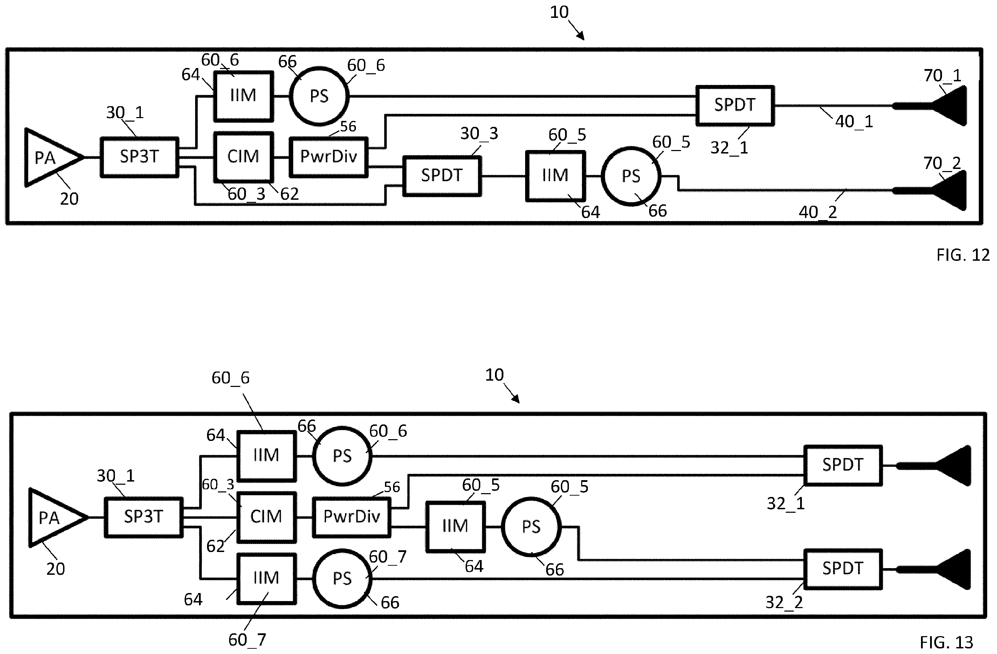

In other examples, a tri-pole switch combines the functionality of the first switch 30_1 and the second switch 30_2 into a single switch that switches to the shared multiplex path 50 or to the first simplex path 50_1 or to the second simplex path 50_2 (see FIGs 11A, 11B, 12A, 12B). The control means controls the tri-pole switch.

In FIGs 3B, 4B and 5, the apparatus 10 comprises a common path input switch 30_3 for coupling a common path shared by at least one simplex path and one of the multiplex paths to the at least one simplex path or the one of the multiplex paths.

The common path comprises a shared variable impedance circuitry 60_5.

The apparatus 10 comprises control means (not illustrated) for controlling the the common path input switch 30_3, and the shared variable impedance circuitry 60_5.

In the example illustrated the common path is shared by at least the first simplex path 50_1 and the second multiplex path 52_2. The common path input switch 30_3 couples the first simplex path 50_1 or the second multiplex path 52_2 (split from the shared multiplex path 52) to the common path. A common path output switch 30_4 is configured to couple the common path 50 shared by the first simplex path 50_1, and the second multiplex path 52_2 with the first antenna port 40_1 or with the second antenna port 40_2.

The apparatus 10 comprises control means (not illustrated) for controlling the the common path input switch 30_3, the common path output switch 30_4, and
the shared variable impedance circuitry 60_5 on the common path.

In FIG 4B the combination of the first switch 30_1 and the second switch 30_2 provide a bypass of the common impedance circuitry 60_3 in the shared multiplex path 52.

In at least some examples the shared variable impedance circuitry 60_5 provides a variable impedance for controlling a difference in impedance between the first multiplex path 52_1 and the second multiplex path 52_2 and for controlling a difference in impedance between the first simplex path 50_1 and the second simplex path 50_2.

In FIG 5, the apparatus 10 comprises a common path input switch 30_3 for coupling a common path shared by the simplex paths (both the first simplex path 50_1 and second simplex path 50_2) and one of the multiplex paths to a common simplex path or the one of the multiplex paths. The common path includes a common simplex path in this example.

In the example illustrated the common path is shared by the first simplex path 50_1, the second simplex path 50_2 and the second multiplex path 52_2. The common path input switch 30_3 couples the shared simplex path 50, which comprises the first simplex path 50_1 and the second simplex path 50_2, or the second multiplex path 52_2 to the common path.

The first switch 30_1 provides a bypass, for the common simplex path 50, of the common impedance circuitry 60_3 in the shared multiplex path 52.

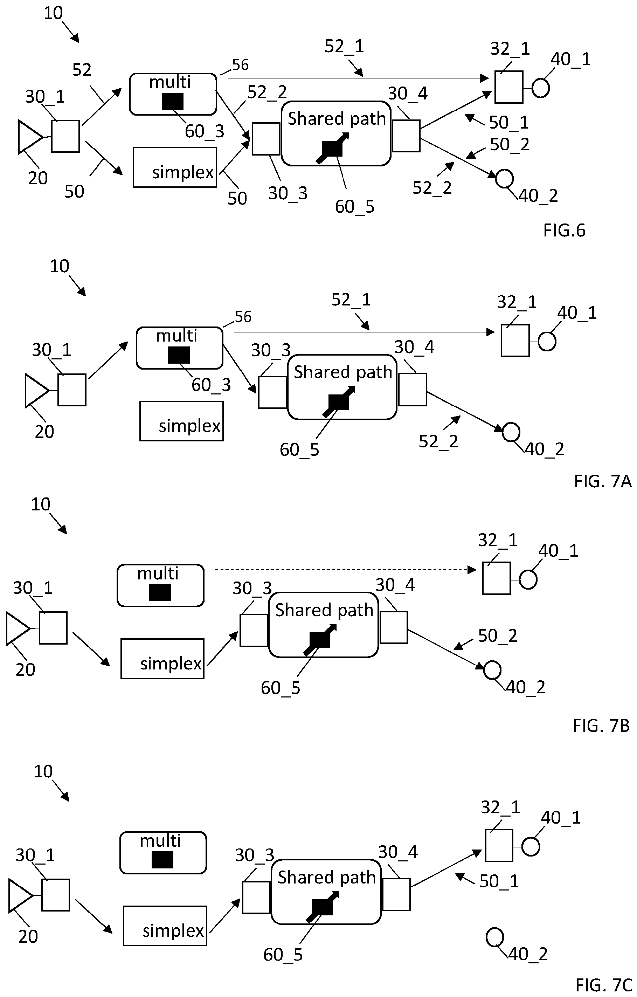

FIG 6 illustrates the apparatus 10 previously described with reference to FIG 5. FIGs 7A, 7B, 7C illustrate operation of the apparatus 10 illustrated in FIG 6.

The apparatus 10 comprises:
a first switch 30_1 configured to couple the output of a power amplifier 20 to:
   a shared multiplex path 52 shared by a first multiplex path 52_1 and a second multiplex path 52_2; or
   a shared simplex path 50 shared by a first simplex path 50_1 and a second simplex path 50_2,
   wherein the shared multiplex path 52 comprises a shared multiplex impedance 60_3; a path splitter 56 for splitting the shared multiplex path 52 into a first multiplex path 52_1 and a second multiplex path 52_2;
a common path input switch 30_3 for coupling a common path shared by the first simplex path 50_1, the second simplex path 50_2 and the second multiplex path 52_2 to the shared simplex path 50 or the second multiplex path 52_2 split from the shared multiplex path 52;
a common path output switch 30_4 for coupling the common path shared by the first simplex path 50_1, the second simplex path 50_2 and the second multiplex path 52_2 with the first antenna port 40_1 or with the second antenna port 40_2, wherein the common path comprises a shared variable impedance circuitry 60_5; and
a first antenna port input switch 32_1 configured to couple the first antenna port 40_1 to the first simplex path 50_1 or the first multiplex path 52_1.

The apparatus 10 additionally comprises control means (not illustrated) for controlling
the first switch 30_1,
the common path input switch 30_3,
the common path output switch 30_4,
the first antenna port input switch 32_1 to couple the power amplifier 20 to the first antenna port 40_1, not the second antenna port 40_2, via the first simplex path 50_1 (FIG 7C)
couple the power amplifier 20 to the second antenna port 40_2, not the first antenna port 40_1, via the second simplex path 50_2 (FIG 7B)
couple the power amplifier 20 simultaneously to the first antenna port 40_1 and the second antenna port 40_2 (FIG 7A).

In this example, when it couples the power amplifier 20 simultaneously to the first antenna port 40_1 and the second antenna port 40_2 (FIG 7A), it couple the power amplifier 20 to the first antenna port 40_1 via the first multiplex path 52_1 and simultaneously couples the power amplifier 20 to the second antenna port 40_2 via the second multiplex path 52_2.

Coupling the power amplifier 20 to the first antenna port 40_1, not the second antenna port 40_2, via the first simplex path (FIG 7C) comprises states {down, down, up, down} for switches 30_1, 30_3, 30_4, 32_1.

Coupling the power amplifier 20 to the second antenna port 40_2, not the first antenna port 40_1, via the second simplex path (FIG 7B) comprises states {down, down, down, up} for switches 30_1, 30_3, 30_4, 32_1.

Coupling the power amplifier 20 simultaneously to the first antenna port 40_1 and the second antenna port 40_2 (FIG 7A) comprises states up, up, down, up} for switches 30_1, 30_3, 30_4, 32_1.

When the first simplex path (FIG 7C) is in use, its impedance is controlled to provide impedance matching between source (power amplifier) and load (antenna coupled to respective antenna port). To transfer maximum power a source impedance and a load impedance should be complex conjugates of each other.

When the second simplex path (FIG 7B) is in use, its impedance is controlled to provide impedance matching between source (power amplifier) and load (antenna coupled to respective antenna port). To transfer maximum power a source impedance and a load impedance should be complex conjugates of each other.

When the first multiplex path (FIG 7A) is in use, its impedance is controlled to provide impedance matching between source (power amplifier) and load (antenna coupled to respective antenna port). To transfer maximum power a source impedance and a load impedance should be complex conjugates of each other. When the second multiplex path (FIG 7A) is in use, its impedance is controlled to provide impedance matching between source (power amplifier) and load (antenna coupled to respective antenna port). To transfer maximum power a source impedance and a load impedance should be complex conjugates of each other.

For multiplex transmission, it can be an object for the transmissions to be in balance at a receiving antenna. It can be an object for those transmissions to be been seen as complex conjugates of each other seen at that receiving antenna (the point for high isolation).

Thus the values for shared impedance circuitry 60_5 in a path shared by at least one simplex path and at least one multiplex path, can be determined by looking up configuration parameters in a lookup table for controlling a network, for example a Pi or T network. A combination of Pi & T networks could also be used. Any circuit element which can provide impedance (capacitive and/or inductive), e.g. a single shunt capacitor or a single series inductor could be used. Real world inductors and capacitors may be able to operate in their preferred impedance region (inductive for an inductor/capacitive for a capacitor) below a self-resonant frequency (SRF), or in the capacitive region for an inductor above the SRF / in the inductive region for a capacitor above the SRF. Any combination of capacitors and/or inductors can in theory be used. Pi or T networks are the most commonly used as they can theoretically transform any impedance to any other impedance, using only three tunable components. Some impedance tuners can use physical components (e.g. inductors) that are switched in and out or can use more than two tunable capacitors (some in series or parallel to a fixed inductor).

The impedance circuitry 60_3 in a path 52 shared by the first and second multiplex paths 52_1, 52_2 can, for example, have different settings which can be stepped through until best measured isolation between transmission and reception is achieved. That is the lowest magnitude S12 parameter is achieved for reception.

The impedance circuitry 60_3 is an impedance match of the power divided multiplex paths. The impedance circuitry 60_5 is an impedance match for complex conjugated match.

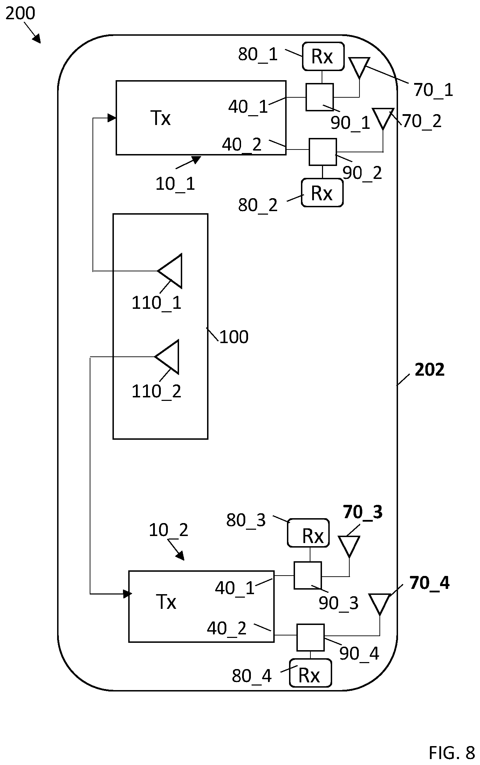

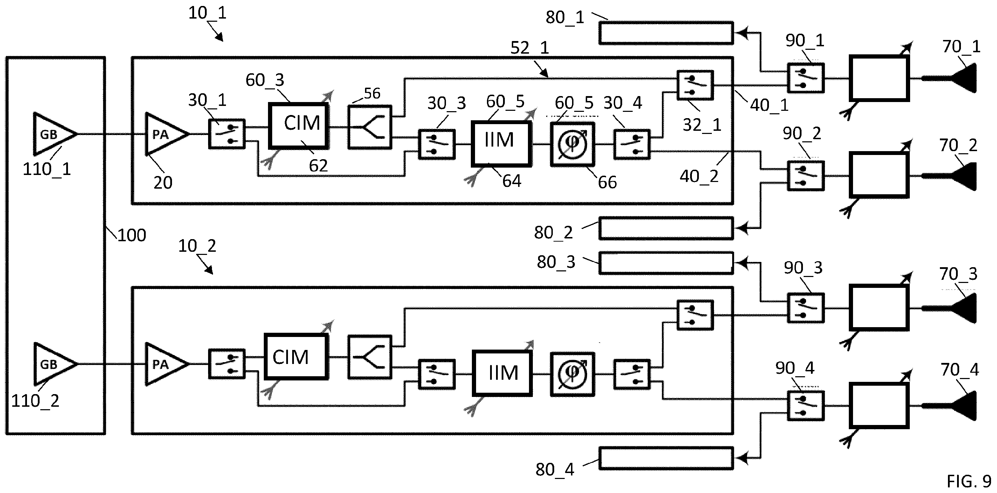

FIG 8 illustrates an example of a device 200 comprising two apparatus 10. The device 200 comprising a first apparatus 10_1 and a second apparatus 10_2. FIG 9 illustrates another example of a device 200 comprising a first apparatus 10_1 and a second apparatus 10_2. In some examples, the device of FIG 9 is an example of the device 200 of FIG 8. In some examples, the device of FIG 8 is an example of the device 200 of FIG 9.

The device 200 comprises circuitry 100 that provides a signal for transmission to the first apparatus 10_1, a signal for transmission to the second apparatus 10_2, or a signal for transmission to the first apparatus 10_1 and a signal for transmission to the second apparatus 10_2.

The circuitry 100 provides control means for the first apparatus 10_1 and control means for the second apparatus 10_2.

The circuitry 100 comprises the baseband (digital circuitry) and the transceiver.

The device 200 comprises a first antenna 70_1 coupled to the first antenna port 40_1 of the first apparatus 10_1 and a second antenna 70_2 coupled to the second antenna port 40_2 of the first apparatus 10_1.

The device 200 comprises a third antenna 70_3 coupled to the first antenna port 40_1 of the second apparatus 10_2 and a fourth antenna 70_4 coupled to the second antenna port 40_2 of the second apparatus 10_2.

A first transmit-receive switch 90_1 under the control of the circuitry 100 controls whether the first antenna 70_1 is coupled to the first antenna port 40_1 of the first apparatus 10_1 or to first receiver circuitry 80_1.

A second transmit-receive switch 90_2 under the control of the circuitry 100 controls whether the second antenna 70_2 is coupled to the second antenna port 40_2 of the first apparatus 10_1 or to second receiver circuitry 80_2.

A third transmit-receive switch 90_3 under the control of the circuitry 100 controls whether the third antenna 70_3 is coupled to the first antenna port 40_1 of the second apparatus 10_2 or to third receiver circuitry 80_3.

A fourth transmit-receive switch 90_4 under the control of the circuitry 100 controls whether the fourth antenna 70_4 is coupled to the second antenna port 40_2 of the second apparatus 10_2 or to fourth receiver circuitry 80_4.

The control can be provided by digital circuitry.

The circuitry 100 is configured to transmit a signal from the first antenna 70_1 and/or the second antenna 70_2 and/or transmit a signal from the third antenna 70_3 and/or the fourth antenna 70_4. The I circuitry 100 is configured to use for reception one or more antenna that is not being used for transmission.

For example, the circuitry 100 is configured to simultaneously transmit from two antennas and receive from another antenna.

| | First Apparatus | | Second Apparatus | |
|---|---|---|---|---|
| | First Antenna | Second Antenna | Third Antenna | Fourth Antenna |
| 1 | Tx | Tx | Rx | |
| 2 | Tx | Tx | | Rx |
| 3 | Rx | | Tx | Tx |
| 4 | | Rx | Tx | Tx |
| 5 | Tx | Rx | Tx | |
| 6 | Tx | | Tx | Rx |
| 7 | Rx | Tx | Tx | |
| 8 | | Tx | Tx | Rx |
| 9 | Tx | Rx | | Tx |
| 10 | Tx | | Rx | Tx |
| 11 | Rx | Tx | | Tx |
| 12 | | Tx | Rx | Tx |

If there are n apparatus and m antenna per apparatus, then there are N=n*m antenna.
The number of duplex Tx options (combinations) is: N!/(N-2)!2!
The number of single Rx options per Tx option is (N-2)
The total number 2*Tx + 1*Rx options is: N!/(N-3)!2!
In this example, m=2, n-2, N=4 and the total number of options is: 4!/2! = 12
The number of multiplex (t) Tx options (t*Tx) is: N!/(N-t)!t!
The number of Rx options (r*Rx) per Tx option is (N-t)!/(N-t-r)!r!
Where r+t ≤ N
The total number t*Tx + r*Rx options is: N!/ (N-t-r)!r! t!
In this example, m=2, n-2, N=4 and t=2, r=1 and the total number of options is: 4!/1!1!2! = 12

In options 1 to 4, multi-antenna transmission occurs within one apparatus 10_i and the reception occurs in the other apparatus 10_j.

In options 5 to 12, multi-antenna transmission occurs across different apparatus 10_i, 10_j. In this example, at one antenna in the first apparatus 10_1 and at one antenna at the second apparatus 10_2. Reception occurs at an antenna in the first apparatus 10_1 or the second apparatus 10_2.

The isolation of reception from transmission can, for example, exceed 45dB or 50dB. This mitigates gain compression of the receiver low noise amplifier (LNA) and improves the SNR at the receiver.

The device 200, via circuitry 100, is dynamically adaptable and can change between different duplex options, for example options 1 to 12 depending on dynamically changing requirements.

The circuitry 100 is configured to apply digital gain differently for transmission via the first apparatus 10_1 and via the second apparatus 10_2. First digital gain 10_1 can be applied for transmission via the first apparatus 10_1. Second digital gain 10_2 can be applied for transmission via the first apparatus 10_1. The circuitry 100 can therefore be positioned independently of the position of the first apparatus 10_1 and the second apparatus 10_2. Analog power control is also possible or a combination of both.

In some examples, first apparatus 10_1 is positioned at one end of the device 200 and the second apparatus 10_2 is positioned at the opposite end, lengthwise, of the device 200. This achieves maximum physical separation between the first apparatus 10_1 and the second apparatus 10_2. Other relative positions of first and second apparatus 10_1, 10_2 may be possible in a device. They could be separated diagonally or across the width, dependent on the aspect ratio of the device. It is also possible for devices to have different shapes and the device need not be rectangular.

In at least some examples, the distance between the two antennas used for Tx combining across different apparatus 10_1, 10_2 is longer than the distance between Rx antenna and its nearest Tx antenna. The distance between antennas used by the apparatus 10_1 is less than the distance between the apparatus 10_1, 10_2. The distance between antennas used by the apparatus 10_2 is less than the distance between the apparatus 10_1, 10_2.

In some examples, the first antenna 70_1, the second antenna 70_2, the third antenna 70_3 and the fourth antenna 70_4 share a ground plane. In some examples, the shared ground plane is a conductive, for example metallic, chassis 202 of the device 200.

One or more antenna 70 may be formed from the chassis of the device 200 by the conductive material of the rim/bezel or in other surfaces of the device (front &/or rear cover). In some examples the one or more antenna 70 may be integrated within the external cover of the device 200, where non-conductive "windows" are provided in the cover to allow radiation to pass through in either direction (some covers may be wholly non-conductive, whereas others may be partially non-conductive).

In some examples, the first antenna 70_1, the second antenna 70_2, the third antenna 70_3 and the fourth antenna 70_4 are multiple non-identical antennas, for example, having non-identical antenna radiation patterns. In some examples, the first antenna 70_1, the second antenna 70_2, the third antenna 70_3 and the fourth antenna 70_4 are different antennas having different radiation patterns (with maximum gain in different directions). The characteristics of the first antenna 70_1, the second antenna 70_2, the third antenna 70_3 and the fourth antenna 70_4 are, are in some examples, different.

The phase control 66 and the impedance control 64 can be used to adjust for relative difference in antenna location and relative difference in antenna characteristics (See FIG 9). Whereas transmission power balance seen at the RX antenna across apparatus 10_1, 10_2 is controlled using different digital amplification 120_1, 110_2, transmission power balance within an apparatus between the transmitting antennas of the apparatus is controlled using the shared multiplex impedance 60_3 in the common multiplex path 52 or the power divider 56 configured to a non-equal power split (See FIG 9).

The device 200, via circuitry 100, is dynamically adaptable and can change between different duplex options depending on dynamically changing requirements, for example, based on measurements made at the device 200 or received by the device 200. The device 200 can for example select multiple different radiation patterns for transmission.

In some examples, the device 200 is a bi-directional radio communication device that is configured to operate in full duplex mode.

In some examples the device 200 is a terminal device and transmission is uplink transmission. In some examples it is a mobile device that is hand-portable. It could alternatively be wearable, e.g. a medical device or a headset, etc The antennas used by an apparatus 10 can therefore be close together.

In some examples the device is configured as user equipment (UE), for example, as specified by Third Generation Partnership project (3GPP) specifications.

The UE 200 can, for example, be configured for sub band non-overlapping full duplex (SBFD) where a TDD unpaired band is used for simultaneous uplink and downlink on different (contiguous) physical resource blocks within the unpaired band.

The device 200 can, for example, be an ambient Internet of things (A-loT) device.

The device 200 can, for example, be a New Radio (NR) Internet of things (IoT) device.

The device 200 can, for example, enable radio frequency energy harvesting via the radio receiver circuitry 80.

The device 200 can, for example, be configured as an activator of a passive radio (A-loT) that transmits an activation signal while simultaneously receiving a return signal.

The device 200 can, for example, be configured as an intermediate device between a base station activator and a passive radio that transmits to the base station while receiving from the passive radio (or vice versa).

The impedance 60_5 provides a difference in impedance between the first multiplex path 52_1 and the second multiplex path 52_2. For example, at least a phase difference is introduced between the first multiplex path 52_1 and the second multiplex path 52_2. For example, a variable phase shifter 66 provides differential phase control between the first multiplex path 52_1 and the second multiplex path 52_2. For example, at least a complex impedance difference is introduced between the first multiplex path 52_1 and the second multiplex path 52_2. For example, variable impedance matching circuit 64 provides differential impedance control between the first multiplex path 52_1 and the second multiplex path 52_2.

The impedance 60_5 provides a difference in impedance between the first simplex path 50_1 and the second simplex path 50_2.

For example, at least a phase difference is introduced between the first simplex path 50_1 and the second simplex path 50_2. For example, a variable phase shifter 66 provides differential phase control between the first simplex path 50_1 and the second simplex path 50_2. For example, at least a complex impedance difference is introduced between the first simplex path 50_1 and the second simplex path 50_2. For example, variable impedance matching circuit 64 provides differential impedance control between the first simplex path 50_1 and the second simplex path 50_2.

Impedance differences can be introduced between the first simplex path 50_1 in the first apparatus 10_1 and the first simplex path 50_1 in the second apparatus 10_2, between the first simplex path 50_1 in the first apparatus 10_1 and the second duplex path 50_2 in the second apparatus 10_2, between the second duplex path 52_2 in the first apparatus 10_1 and the first simplex path 50_1 in the second apparatus 10_2, and between the second duplex path 50_2 in the first apparatus 10_1 and the second duplex path 50_2 in the second apparatus 10_2,

The variable impedance matching circuit 64 operates as isolation impedance matching (IIM) circuitry.

The phase shifter 66 is shared between at least one of the first multiplex path 52_1 and the second multiplex path 52_2 and one of the first simplex path 50_1 and the second simplex path 50_2. In some examples, the phase shifter 66 is shared between one of the first multiplex path 52_1 and the second multiplex path 52_2 and both of the first simplex path 50_1 and the second simplex path 50_2.

The optional additional impedance circuitry 60_3 (shared multiplex impedance) provides a Combined Impedance Match (CIM) 62 which counteracts the effect of the IIM 64 on the combined antenna impedance when the two combined transmitting antennas are in the same apparatus 10. The additional impedance circuitry 60_3 provides extra matching control of the combined multiplex paths 52_1, 52_2. The PwrDiv controls power balance within the apparatus 10.

Although two apparatus 10 have been described, it should be appreciated that more apparatus 10 could be used in a device 200.

Although two antenna have been described for each apparatus 10, it should be appreciated that an apparatus 10 can have two or more antennas and different apparatus can have different numbers of antennas.

Different polarized antennas may also be in the apparatus 10, where for example a first antenna having a first polarization and a second antenna having a second different polarization may be considered as different antennas.

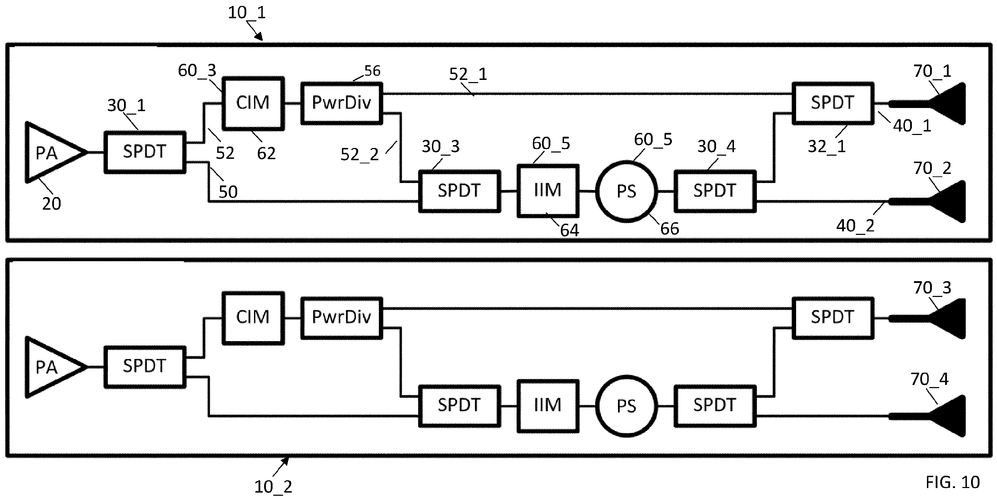

Referring to FIG 9 and 10, the apparatus 10_1 (and the apparatus 10_2) comprise:
a first switch 30_1 configured to couple a power amplifier output to:
   a shared multiplex path 52 shared by a first multiplex path 52_1 and a second multiplex path 52_2
   a shared simplex path 50 shared by a first simplex path 50_1 and a second simplex path 50_2
   wherein the shared multiplex path comprises a shared multiplex impedance 60_3;
a path splitter for splitting the shared multiplex path into the first multiplex path 52_1 and the second multiplex path 52_2
a common path input switch 30_3 for coupling a common path shared by the first simplex path 50_1, the second simplex path 50_2 and the second multiplex path 52_2 to the shared simplex path 50 or the second multiplex path 52_2 split from the shared multiplex path;
a common path output switch 30_4 for coupling the common path shared by the first simplex path 50_1, the second simplex path 50_2 and the second multiplex path 52_2 with a first antenna port 40_1 or with a second antenna port 40_2, wherein the common path comprises a shared variable impedance circuitry 60_5;
a first antenna port input switch 32_1 configured to couple the first antenna port 40_1 to the first simplex path 50_1 (FIG 7C) or the first multiplex path 52_1 (FIG 7A);
control means (not illustrated) for controlling the
the first switch 30_1,
the common path input switch 30_3,
the common path output switch 30_4,
the first antenna port input switch 32_1
to perform one of:
   couple the first power amplifier 20 to the first antenna port 40_1, not the second antenna port 40_2, via the first simplex path; or
   couple the power amplifier 20 to the second antenna port 40_2, not the first antenna port 40_1, via the second simplex path; or
   couple the power amplifier 20 simultaneously to the first antenna port 40_1 and the second antenna port 40_2.

Referring to FIG 11A and 11B, the apparatus 10_1 (and the apparatus 10_2) comprise:
a first switch 30_1 configured to couple a first power amplifier 20 output to:
   a shared multiplex path 52 shared by a first multiplex path 52_1 and a second multiplex path 52_2
   a first simplex path 50_1
   a second simplex path 50_2
   wherein the shared multiplex path comprises a shared multiplex impedance 60_3;
a path splitter for splitting the shared multiplex path into the first multiplex path 52_1 and the second multiplex path 52_2
a first antenna port input switch 32_1 configured to couple a first antenna port 40_1 to the first simplex path 50_1 or the first multiplex path 52_1;
control means for controlling the
the first switch 30_1,
the common path input switch 30_3,
the first antenna port input switch 32_1
to perform one of:
   couple the first power amplifier 20 to the first antenna port 40_1, not the second antenna port 40_2, via the first simplex path; or
   couple the power amplifier 20 to the second antenna port 40_2, not the first antenna port 40_1, via the second simplex path; or
   couple the power amplifier 20 simultaneously to the first antenna port 40_1 and the second antenna port 40_2.

In FIG 11A, there is a common path input switch 32_2 for coupling a common path shared by the second simplex path 50_2 and the second multiplex path 52_2 to the second simplex path 50_2 or the second multiplex path 52_2 split from the shared multiplex path 52;

In FIG 11B, the switch 32_1 for coupling one of the first simplex path 50_1 and the first multiplex path 52_1 to first antenna port 70_1;

In FIG 11A, the common path comprises a shared variable impedance circuitry 60_5 between the common path input switch 32_2 and a switch 30_4 to the first antenna port 40_1 or the second antenna port 40_2.

A common path output switch 30_4 for coupling the common path shared by the first simplex path 50_1, the second simplex path 50_2 and the second multiplex path 52_2 with the first antenna port 40_1 or with the second antenna port 40_2. There is control means for controlling the control common path output switch 30_4.

The switch connection to the first antenna port is needed in this example, where an apparatus 200 uses the first apparatus 10_1 (FIG 11A) and the second apparatus 10_2 (FIG 11B) because the impedance/phase difference is controlled by the iControl first apparatus 10_1 not the second apparatus 10_2.

In FIG 11B, the second multiplex path 52_2 comprises the shared variable impedance circuitry 60_5
between the common path input switch 30_3 and the path splitter 56.

FIG 12 illustrates an apparatus 10 similar to the apparatus 10_2 illustrated in FIG 11B. It additionally comprises an impedance 60_6 in the first simplex path 50_1.

The impedance 60_6 comprises a variable phase shifter 66 and, separately, a variable impedance matching circuit 64. The variable impedance matching circuit 64 operates as isolation impedance matching circuitry (IIM).

FIG 13 illustrates an apparatus 10 similar to the apparatus 10_2 illustrated in FIG 12. It additionally comprises an impedance 60_7 in the second simplex path 50_2.

The impedance 60_7 comprises a variable phase shifter 66 and, separately, a variable impedance matching circuit 64. The variable impedance matching circuit 64 operates as isolation impedance matching circuitry (IIM).

As used in this application, the term 'circuitry' may refer to one or more or all the following:
(a) hardware-only circuitry implementations (such as implementations in only analog and/or digital circuitry) and
(b) combinations of hardware circuits and software, such as (as applicable):
   i. a combination of analog and/or digital hardware circuit(s) with software/firmware and
   ii. any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the claim element, a baseband integrated circuit for a mobile device or a similar integrated circuit in a server, a cellular network device, or other computing or network device.

The examples provided can operate at any suitable transmission/reception frequency.

In at least some examples, the examples provided can operate at transmission/reception frequencies less than 10 GHz.

In at least some examples, the examples provided can operate at transmission/reception frequencies less than 6 GHz.

The blocks illustrated in the accompanying Figs may represent steps in a method and/or sections of code in the computer program. The illustration of a particular order to the blocks does not necessarily imply that there is a required or preferred order for the blocks and the order and arrangement of the block may be varied. Furthermore, it may be possible for some blocks to be omitted.

As used here 'module' refers to a unit or apparatus that excludes certain parts/components that would be added by an end manufacturer or a user. The apparatus 10 can, for example be a module. The device 200 can, for example be a module.

Where a structural feature has been described, it may be replaced by means for performing one or more of the functions of the structural feature whether that function or those functions are explicitly or implicitly described.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An apparatus comprising:
at least a first antenna port and a second antenna port;
a power amplifier;
first switching circuitry for switching between
a first simplex path from the power amplifier to the first antenna port, not the second antenna port;
a second simplex path from the power amplifier to second antenna port, not the first antenna port;
multiplex paths from the power amplifier simultaneously to the first antenna port and the second antenna port; and
impedance means for providing different impedance, for a first multiplex path from the power amplifier to the first antenna port and for a second multiplex path from the power amplifier to the second antenna port, while the first multiplex path and the second multiplex path are simultaneous multiplex paths from the power amplifier to the first antenna port and the second antenna port respectively.

2. An apparatus as claimed in claim 1, wherein the impedance means is configured to control a difference in impedance between the first multiplex path and the second multiplex path and a difference in impedance between the first simplex path and the second simplex path.

3. An apparatus as claimed in claim 2, wherein the impedance means comprises shared impedance circuitry that is shared between multiple ones of the first multiplex path, the second multiplex path, the first simplex path and the second simplex path.

4. An apparatus as claimed in claim 3, wherein the shared impedance circuitry comprises a complex impedance matching network and a phase shifter shared between at least one of the first multiplex path and the second multiplex path and at least one of the first simplex path and the second simplex path.

5. An apparatus as claimed in any preceding claim, comprising a first antenna port input switch configured to couple the first antenna port to the first simplex path or the first multiplex path.

6. An apparatus as claimed in any preceding claim, comprising a shared multiplex path that is shared by the first multiplex path and the second multiplex path,
and a path splitter for splitting the shared multiplex path into the first multiplex path and the second multiplex path, wherein the shared multiplex path comprises a shared multiplex impedance circuitry.

7. An apparatus as claimed in any preceding claim comprising:
a common path input switch for coupling a common path shared by at least the second simplex path and the second multiplex path to the first or second simplex path or the second multiplex path, wherein the common path comprises shared variable impedance circuitry.

8. An apparatus as claimed in any preceding claim comprising: a shared simplex path shared by the first simplex path and the second simplex path and switching circuitry configured to provide a bypass of a variable multiplex impedance means for the shared simplex path.

9. An apparatus as claimed in claim 8 comprising:
a common path input switch for coupling a common path shared by the first simplex path and the second multiplex path to the shared simplex path or the second multiplex path split from the shared multiplex path;
a common path output switch for coupling the common path shared by the first simplex path, and the second multiplex path with the first antenna port or with the second antenna port, wherein the common path comprises shared variable impedance circuitry.

10. An apparatus as claimed in claim 8 comprising:
a common path input switch for coupling a common path shared by the first simplex path, the second simplex path and the second multiplex path to the shared simplex path or the second multiplex path split from the shared multiplex path;
a common path output switch for coupling the common path shared by the first simplex path, the second simplex path and the second multiplex path with the first antenna port or with the second antenna port, wherein the common path comprises shared variable impedance circuitry.

11. An apparatus as claimed in any preceding claim comprising:
a first switch configured to couple the power amplifier output to:
a shared multiplex path shared by the first multiplex path and the second multiplex path; or
a shared simplex path shared by the first simplex path and the second simplex path wherein the shared multiplex path comprises a shared multiplex impedance;
a path splitter for splitting the shared multiplex path into the first multiplex path and the second multiplex path;
a common path input switch for coupling a common path shared by the first simplex path, the second simplex path and the second multiplex path to the shared simplex path or the second multiplex path split from the shared multiplex path;
a common path output switch for coupling the common path shared by the first simplex path, the second simplex path and the second multiplex path with the first antenna port or with the second antenna port,
wherein the common path comprises shared variable impedance circuitry;
a first antenna port input switch configured to couple the first antenna port to the first simplex path or the first multiplex path;
control means for controlling the
the first switch,
the common path input switch,
the common path output switch,
the first antenna port input switch
to provide one of:
couple the power amplifier to the first antenna port, not the second antenna port, via the first simplex path;
couple the power amplifier to the second antenna port, not the first antenna port, via the second simplex path;
couple the power amplifier simultaneously to the first antenna port and the second antenna port.

12. A device comprising:
at least a first apparatus as claimed in any of claims 1 to 11 and a second apparatus as claimed in any of claims 1 to 11; and
circuitry configured to:
provide to the first apparatus a first signal for transmission via the first apparatus,
provide to the second apparatus a second signal for transmission via the second apparatus,
simultaneously provide to the first apparatus a first signal for transmission via the first apparatus and to the second apparatus a second signal for transmission via the second apparatus,
and configured to provide different amplification for the first signal and the second signal when simultaneously provided to the first apparatus and the second apparatus, respectively.

13. A device as claimed in claim 12 comprising multiple non-identical antennas having non-identical antenna radiation patterns including:
a first antenna coupled to the first antenna port of the first apparatus,
a second antenna coupled to the second antenna port of the first apparatus,
a third antenna coupled to the first antenna port of the second apparatus, and
a fourth antenna coupled to the second antenna port of the second apparatus;
wherein the circuitry is configured to adaptively transmit a signal from the first antenna and/or the second antenna and/or transmit a signal from the third antenna and/or the fourth antenna and is configured to adaptively control, for simultaneous reception, one or more of the first antenna, second antenna, third antenna and fourth antenna that is not being used for simultaneous transmission.

14. A device as claimed in claim 13, wherein the impedance means of the first apparatus and/or the impedance means of the second apparatus is controlled to provide at least 45dB isolation between transmission and reception.

15. A device as claimed in any of claims 12 to 14, wherein a conductive chassis part of the device provides a common ground plane for the first antenna, the second antenna, the third antenna and the fourth antenna.
